Europäisches Patentamt

(19) European Patent Office

Office européen des brevets

(11) EP 0 443 644 B2

(12) NEW EUROPEAN PATENT SPECIFICATION

(45) Date of publication and mention
of the opposition decision:
13.10.1999 Bulletin 1999/41

(45) Mention of the grant of the patent:
03.11.1993 Bulletin 1993/44

(21) Application number: 91200147.6

(22) Date of filing: 25.01.1991

(51) Int. Cl.⁶: B60K 31/00

(54) **Adaptive cruise control system**

Sich anpassendes Geschwindigkeitsregelsystem

Système de commande de vitesse adaptatif

(84) Designated Contracting States:
DE FR GB

(30) Priority: 20.02.1990 US 481261

(43) Date of publication of application:
28.08.1991 Bulletin 1991/35

(73) Proprietor:
GENERAL MOTORS CORPORATION
Detroit Michigan 48202 (US)

(72) Inventors:
 • Chundrlik, William Joseph, Jr.
   Rochester, Michigan 48064 (US)
 • Labuhn, Pamela Irene
   Utica, Michigan 48087 (US)

(74) Representative:
Manitz, Finsterwald & Partner
Postfach 22 16 11
80506 München (DE)

(56) References cited:
DE-A- 3 438 632          DE-A- 3 822 119
DE-C2- 2 846 873         DE-C2- 3 304 620
FR-A- 2 427 656          FR-A- 2 521 080
US-A- 4 706 195

**Description**

This invention relates to an adaptive cruise control system for a vehicle as disclosed in FR-A-2 521 080.

It is well known to provide automatic vehicle cruise control systems for maintaining the speed of a vehicle at an operator-set speed. It is further known to provide, in conjunction with these known control cruise systems, a system for detecting the presence and the distance to a preceding vehicle and for adjusting the vehicle speed to maintain a trailing distance to the preceding vehicle. In essence, the vehicle speed is controlled to the speed of the preceding vehicle with a predetermined separation from the preceding vehicle with the vehicle speed being limited at the operator-set cruise speed.

Typically, the trailing distance provided by these known systems is a predetermined calibrated value or schedule of values as a function of parameters such as vehicle speed. These calibration values generally do not take into account varying traffic conditions, weather conditions, road surface conditions or personal driving habits of the vehicle operator. The calibrated values are accordingly a compromise that may be optimum for one operator and for a specific set of weather/road/traffic conditions but may not be optimum for different operators and varying conditions.

DE-A-3438632 discloses a control system comprising a velocity sensor for sensing the velocity of the source vehicle; a distance sensor for sensing the distance from the source vehicle to the obstructing vehicle; means adjustable by a driver of the source vehicle independent of vehicle operating conditions for providing a signal representative of a driver reaction time; and processing means for determining an alert distance as a function of the velocity of the source vehicle and the driver reaction time.

It would be desirable to provide for an adaptive cruise control system which maintains a pacing from a preceding vehicle that may be adjusted by the vehicle operator according to his personal driving habits and to the particular weather, road and traffic conditions.

The present invention seeks to provide an improved cruise control system.

Accordingly, an aspect of the present invention provides an adaptive cruise control system as defined in claim 1.

According to another aspect of the present invention, there is provided a method of controlling the distance of a source vehicle to an obstructing vehicle as defined in claim 7.

It is possible with the system to maintain, for example, a desired selected driver-set speed in the absence of a detected preceding vehicle and to adjust the vehicle speed when another vehicle is detected so as to maintain a following distance which is, for example, set by the vehicle driver.

In an embodiment, the adaptive cruise system determines the spacing to an obstructing vehicle on the basis of a driver reaction term, wherein the driver reaction term may be modified by the vehicle driver to adjust the trailing distance.

Preferably, an alert distance is computed which is the sum of a distance based on driver reaction time and the difference between a distance computed for an obstructing vehicle to stop and a distance computed for the controlled vehicle to stop. To provide for a driver selectable trailing distance, the driver reaction term of the alert distance may be adjusted by the vehicle driver to achieve a desired distance to the obstructing vehicle.

An embodiment of the present invention is described below, by way of illustration only, with reference to the accompanying drawings, in which:

> Figure 1 is a diagram illustrating the relationship between a pair of vehicles of which one incorporates an embodiment of adaptive cruise system;
> Figure 2 is a diagram of the adaptive cruise system; and
> Figures 3 and 4 are flow charts illustrating the operation of the adaptive cruise system of Figure 2.

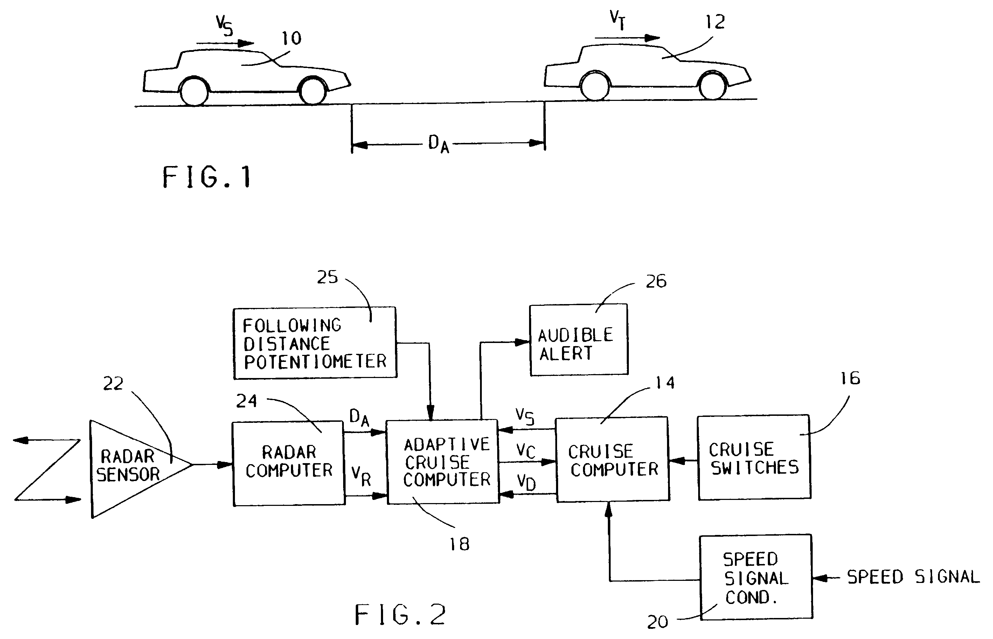

Referring to Figure 1, there is illustrated a general diagram depicting the relationship between a source vehicle 10 to which is fitted an embodiment of cruise system, trailing an obstructing vehicle 12 on a roadway surface. The source vehicle 10 has a speed $V_S$, the obstructing vehicle 12 has a speed $V_T$, and two the vehicles 10 and 12 are separated from one another by a distance $D_A$.

The adaptive cruise system fitted to the source vehicle 10 is shown in Figure 2. It includes a conventional cruise computer 14 which is enabled by manual operation of conventional cruise switches 16 (including an on/off switch and a set switch) for maintaining the speed of the source vehicle 10 at a command speed $V_C$, provided by an adaptive cruise computer 18. To enable closed-loop control of the speed of the source vehicle 10 to the commanded speed $V_C$, the cruise computer 14 receives a vehicle speed signal which is a measure of the speed $V_S$ of the source vehicle 10 obtained from a speed signal conditioner 20 which in turn receives a speed signal from a transducer (not shown) monitoring the speed of the source vehicle 10. This speed transducer may be any suitable velocity measuring transducer, such as a speed sensor monitoring the output rotational speed of the transmission. The cruise computer 14 outputs to the adaptive cruise computer 18 a driver set speed $V_D$ and the measured speed $V_S$ of the source vehicle 10.

The adaptive cruise computer 18 receives information related to the distance and relative velocity of the obstructing vehicle 12 via a conventional radar sensor 22. As will be apparent, the radar sensor 22 may take the form of a conventional radar system, providing a measure of the distance to an object and the relative velocity between the radar sensor 22 and the object.

The output signal of the radar sensor 22 is sent to a radar computer 24 which computes the distance $D_A$ between the source and obstructing vehicles 10 and 12 along with the relative velocity $V_R$ of the source vehicle relative to the obstructing vehicle 10. The values of $D_A$ and $V_R$ are sent to the adaptive cruise computer 18.

While distance and relative velocity measurements are illustrated as being obtained by a radar sensor, other forms of sensors, such as infra-red and ultrasonic sensors, providing distance and relative velocity measurements may also be used.

The adaptive cruise computer 18 controls, via the cruise computer 14, the speed of the source vehicle 10 so as to maintain a desired distance $D_D$ from the obstructing vehicle 12. The desired distance is adjustable by the driver by adjustment of the following distance potentiometer 25. This potentiometer may be mounted at the instrument panel of the vehicle and may comprise a selector having a number of detent positions with a given desired following distance value associated with each respective detent position. In another embodiment, the potentiometer 25 may be an infinitely variable potentiometer.

The adaptive cruise computer 18 computes an alert distance $D_{alert}$ as a function of a term based on driver reaction time. This term is adjusted by control of the following distance potentiometer 25 to provide for driver-controlled adjustment of the desired distance $D_D$ which is to be maintained between the source vehicle 10 and the obstructing vehicle 12. By adjustment of the driver reaction term of $D_{alert}$, the driver of the source vehicle 10 may adjust the desired distance $D_D$ to accommodate various road surface conditions, the set cruise speed $V_D$, traffic conditions and driver preferences. The computed value of $D_{alert}$ is also used to provide an warning to the driver of the source vehicle 10 when the actual distance $D_A$ to the obstructing vehicle 12 is less than the computed value. This is accomplished by energizing an audible alert 26 positioned in the passenger compartment of the vehicle.

In one embodiment utilizing only the distance $D_A$ to the vehicle 12, $D_{alert}$ is based solely on the driver reaction term. In another embodiment utilizing both the distance $D_A$ to the vehicle 12 and the relative velocity $V_R$, $D_{alert}$ is based upon (A) a computed distance to bring the source vehicle 10 to a stop, (B) the computed distance required for the obstructing vehicle 12 to come to a full stop, and (C) a term based on driver reaction time. In general, however, $D_{alert}$ in each embodiment is a function of the driver reaction term that is adjusted by control of the following distance potentiometer 25 to provide for driver-controlled adjustment of the desired distance DD.

From the computed value of $D_{alert}$, the adaptive cruise computer 18 then computes the desired trailing distance $D_D$. In this embodiment, the value of $D_D$ is established at the sum of $D_{alert}$ plus a constant value X which, in one embodiment, is 13 metres. In other embodiments, X may be a variable such as a function of the speed $V_S$ of the source vehicle 10. The adaptive cruise computer 18 then sends to the cruise computer 14 a command speed $V_C$ based upon the sensed distance $D_A$ between the source and target vehicles 10 and 12 so as to maintain the desired distance $D_D$. The computed command speed value $V_C$ is kept less than the operator set cruise speed $V_S$ established by the vehicle driver by actuation of the set cruise switch. The effect of this is that in the absence of an obstructing vehicle 12, the adaptive cruise computer 18 in conjunction with the cruise computer 14 provides for standard conventional cruise control of the source vehicle 10 at the speed $V_D$ set by the vehicle driver upon actuation of the set switch of the cruise switches 16.

The cruise computer 14, the adaptive cruise computer 18 and the radar computer 24 take the form of conventional general purpose digital processors programmed to control the source vehicle 10 as described herein. They generally comprise a read-only memory, a random access memory, an analog-to-digital converter, a central processing unit and an input-output section for interfacing with external computers and/or other devices. While the digital processors employed in the cruise computer 14, the adaptive cruise computer 18 and the radar computer 24 may take any conventional form, one such form may be the single chip Motorola microcomputer MC-68HC11. Alternatively, multiple processors or other circuit forms may be employed.

While Figure 2 illustrates information transfer between the processors via individual multiple data lines, the information is typically transferred between them via serial communication links generally under the control of one of the processors acting as a master processor.

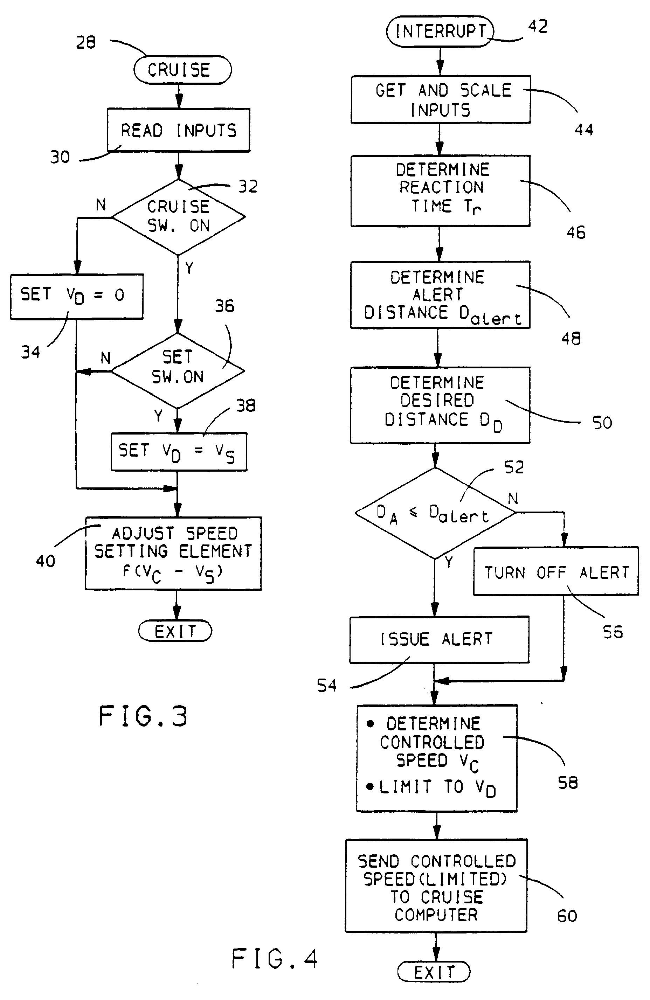

The read-only memories of the computers 14 and 18 contain the instructions necessary to implement their respective control algorithms in addition to calibration constants utilized in controlling the source vehicle 10. The flow diagrams of Figures 3 and 4 illustrate the control algorithms of the cruise and adaptive cruise computers 14 and 18 and describe the general task or process executed by the respective computer.

Referring to Figure 3, the operation of the cruise computer 14 in controlling the speed of the source vehicle 10 is illustrated. This routine is executed at repeated interrupt intervals established by an internal timer. Upon the occurrence of a timer interrupt, the cruise control routine is initiated at step 28 and proceeds to a step 30 where the values of its various inputs are read and stored. These inputs include the state of the cruise switches 16 and the speed of the vehicle represented by the speed signal output from the speed signal conditioner 20.

The next step 32 determines whether the vehicle driver has actuated the cruise on/off switch to an on position. If this is not the case, the program proceeds to a step 34 where the driver set speed $V_D$ is set equal to 0. However, if the cruise on/off switch has been actuated to its on position, the program determines the state of the cruise set switch at step 36. If the set switch is actuated, the program proceeds to a step 38 at which the driver set speed $V_D$ is set equal to the actual vehicle speed $V_S$ read at step 30. As will be described, $V_D$ will be utilized by the adaptive cruise control computer 18 in establishing the commanded speed $V_C$. If step 36 determines that the set switch is not being actuated, the step 38 is by-passed so that the value of $V_D$ previously established at either step 34 or at step 38 remains unchanged.

The cruise routine then provides for control of the source vehicle speed $V_S$ via step 40 by adjusting a speed-setting element on the source vehicle 10 on the basis of the difference between the source vehicle speed $V_S$ and to the commanded vehicle speed $V_C$ provided by the adaptive cruise computer 18. For example, the speed setting element may comprise a stepper motor controlled throttle that regulates the air intake of the engine of the source vehicle 10 as described in EP-A-0,242,039. In this case, step 38 may further provide for coupling the stepper motor to the throttle shaft, step 34 may further provide for decoupling the stepper motor from the throttle shaft and step 40 may provide for establishing a motor position command that is a function of the difference in speeds (referred to hereinafter as speed error) and for controlling the stepper motor to achieve the commanded speed $V_C$. In summary, step 40 adjusts the source vehicle speed setting element in direction to restore the actual vehicle speed $V_S$ to the command speed $V_C$. From step 40, the program exits the cruise control routine of Figure 3.

While not illustrated, it is to be understood that the cruise routine may also include other conventional cruise functions such as a tap up/tap down facility for incrementally adjusting the driver set speed $V_D$, and a facility for disabling the cruise control in response to the operation of the vehicle brakes.

Referring next to Figure 4, the interrupt routine executed by the adaptive cruise computer 18 at repeated interrupt intervals established by an internal timer is illustrated. This routine is entered at step 42 and proceeds to a step 44 where the various inputs are obtained and scaled. These inputs include the actual distance $D_A$ to the obstructing vehicle 12 and the relative speed $V_R$ between the source and obstructing vehicles 10 and 12 obtained by the radar computer 24, the speed $V_S$ of the source vehicle 10 and the driver set speed $V_D$ provided by the cruise computer 14 and the driver controlled output of the following distance potentiometer 25. The relative speed input $V_R$ is also indicative of which vehicle is travelling faster, for example being negative when the speed of the obstructing vehicle 10 is greater than the speed of the source vehicle 12.

While the various signals between computers are depicted in Figure 2 as being provided over individual communication lines, it is to be understood that those signals may be provided by means of a serial data link under control of the adaptive cruise computer 18 during step 44.

At step 46, the routine determines a value of a reaction time factor $T_r$ established by the vehicle driver by operation of the following distance potentiometer 25. This value is utilized to establish a driver-controlled distance to be maintained between the source and obstructing vehicles 10 and 12. This time factor may be variable and represent a driver reaction time varying in one embodiment from 0.3 to 1.75 seconds.

At step 48, the alert distance $D_{alert}$ previously referred to is computed on the basis of the expression

$$D_{alert} = (V_S^2 / K_1) - [(V_S - V_R)^2 / K_2] + T_r V_S$$

where $K_1$ and $K_2$ are vehicle deceleration rate constants. In one embodiment, $K_1$ and $K_2$ are equal and represent respective deceleration rates of 5 m/s$^2$. The first term of the expression represents the distance required to bring the source vehicle 10 to a stop, the second term represents the distance required to bring the obstructing vehicle 12 to a stop and the last term represents a driver reaction distance based on the driver reaction time set by the vehicle driver by operation of the following distance potentiometer 25, and as computed at step 46. As can be seen, by varying the value of the driver reaction time $T_r$, the value of $D_{alert}$ may be be adjusted by the vehicle driver to take into account varying driving conditions and driver preferences. In another embodiment, where only the range $D_A$ to the target vehicle 12 is measured, $D_{alert}$ may be equal to the driver reaction term $T_r V_S$. Other expressions may be utilized for determining $D_{alert}$. However, each includes the driver reaction term and may be generally expressed as

$$D_{alert} = f(T_r V_S).$$

At the next step 50, the desired distance $D_D$ to be maintained between the source and obstructing vehicles 10 and 12 is computed on the basis of the expression

$$D_D = D_{alert} + X$$

where X is a constant, such as 13 metres. The distance $D_D$ represents the distance to be maintained between the source and obstructing vehicles 10 and 12 by controlling the speed of the source vehicle 10, limited to being no more than the set speed $V_D$ established via the steps 32 to 38 of Figure 3.

The audible alert 26 is energized when the distance $D_A$ between the source and obstructing vehicles 10 and 12 becomes less than or equal to the computed

alert distance $D_{alert}$ at step 48. When this condition is sensed, at step 52, an alert is issued at step 54. However, when the distance $D_A$ becomes greater than the alert distance $D_{alert}$, the audible alert 26 is de-energized at step 56.

The routine next determines at step 58 the required command speed $V_C$ to maintain the desired distance $D_D$. This speed is determined on the basis of the expression

$$V_C = K_p (D_D - D_A) + (V_S - V_R).$$

The term $D_D - D_A$ is the difference between the desired distance $D_D$ and the actual distance $D_A$, and can be thought of as a 'distance error', the term $V_S - V_R$ is a measure of the obstructing vehicle speed $V_T$, and $K_p$ is a gain factor which in one embodiment is a constant, and in another embodiment is a variable which is a function of the deviation of the distance $D_A$ from the desired distance $D_D$. The effect of the foregoing expression is to provide proportional control of the speed of the source vehicle 10 to slow it down or speed it up so as to attain the desired following distance $D_D$ and then to maintain the source vehicle 10 at the speed of the obstructing vehicle 12, limited, of course to the driver set speed.

It can be seen from the foregoing expression, that the commanded speed $V_C$ is equal to the obstructing vehicle speed $V_T$ when the distance $D_A$ between the two vehicles is, substantially, equal to the desired distance $D_D$.

In the embodiment where only distance to the obstructing vehicle is measured, and where the relative velocity is not known, the expression for $V_C$ is preferably of a form which provides proportional-integral control of the source vehicle 10.

The computed value of $V_C$ is limited at step 58 to a maximum value equal to the set value $V_D$ of desired speed established by the cruise routine of Figure 3. The effect of this limit is to establish a cruise speed equal to the driver set speed $V_D$, established when the cruise set switch is actuated, in the absence of an obstructing vehicle 12, or when the obstructing vehicle 12 is at a speed and/or distance to enable the source vehicle 10 to cruise at the operator set speed $V_D$.

Step 60 of the routine sends the computed commanded speed $V_C$ to the cruise computer 14 via the serial data link which, as previously described, provides via the cruise routine of Figure 3, for control of the speed of the source vehicle 10 to the commanded speed $V_C$. From step 60, the program exits the interrupt routine of Figure 4.

**Claims**

1. An adaptive cruise control system for controlling the distance of a source vehicle (10) to an obstructing vehicle (12) comprising a velocity sensor (20) for sensing the velocity ($V_S$) of the source vehicle; a distance sensor (22,24) for sensing the distance ($D_A$) from the source vehicle to the obstructing vehicle; and control means (14) for adjusting the velocity of the source vehicle to the source vehicle command velocity ($V_C$); characterised by comprising means (25) adjustable by a driver of the source vehicle independent of vehicle operating conditions for providing a signal representative of a driver reaction time ($T_r$); processing means (18) for determining an alert distance ($D_{alert}$) as a function of the velocity ($V_S$) of the source vehicle and the driver reaction time ($T_r$), for determining a desired distance ($D_D$) of the source vehicle to the obstructing vehicle as a function of the alert distance ($D_{alert}$) and a preset distance (X), and for determining a source vehicle command velocity ($V_C$) suitable for establishing the desired distance ($D_D$).

2. An adaptive cruise control system according to claim 1, comprising velocity sensing means (20,22) for obtaining the relative velocity ($V_R$) of the source vehicle to the obstructing vehicle; the processing means (18) being adapted to determine the alert distance ($D_{alert}$) as a function of the velocity of the source vehicle ($V_S$), the relative velocity ($V_r$) and the driver reaction time ($T_r$).

3. An adaptive cruise control system according to claim 2, wherein the processing means (18) is adapted to determine the alert distance ($D_{alert}$) on the basis of the expression

$$D_{alert} = (V_S{}^2/K_1) - [(V_S - V_R)^2/K_2] + T_r V_s,$$

the terms of which are as herein defined.

4. An adaptive cruise control system according to claim 2 or 3, wherein the processing means (18) is adapted to determine the source vehicle command velocity ($V_C$) as a function of the source vehicle velocity ($V_S$), the relative velocity ($V_R$) and the difference between the actual distance ($D_A$) and the desired distance ($D_D$).

5. An adaptive cruise control system according to claim 4, wherein the processing means (18) is adapted to determine the source vehicle command velocity ($V_C$) on the basis of the expression

$$V_C = K_p (D_D - D_A) + (V_S - V_R)$$

the terms of which are as herein defined.

6. An adaptive cruise control system according to any preceding claim, comprising desired velocity setting means (16) for setting a desired cruise velocity ($V_D$); and limiting means (14,18) for limiting the determined vehicle command velocity ($V_C$) to being no more than the desired cruise velocity ($V_D$).

7. A method of controlling the distance of a source vehicle (10) to an obstructing vehicle (12) comprising the steps of sensing the velocity ($V_S$) of the source vehicle; sensing the distance ($D_A$) from the source vehicle to the obstructing vehicle; and adjusting the velocity of the source vehicle to the source vehicle command velocity ($V_C$); characterised by the driver providing a signal which is adjustable and representative of a driver reaction time ($T_r$) independent of vehicle operating conditions; determining an alert distance ($D_{alert}$) as a function of the velocity ($V_S$) of the source vehicle and the driver reaction time ($T_r$); determining a desired distance ($D_D$) of the source vehicle to the obstructing vehicle as a function of the alert distance ($D_{alert}$) and a preset distance (X); determining a source vehicle command velocity ($V_C$) suitable for establishing the desired distance ($D_D$).

8. A method according to claim 7, comprising the steps of obtaining the relative velocity ($V_R$) of the source vehicle to the obstructing vehicle; and determining the alert distance ($D_{alert}$) as a function of the velocity of the source vehicle ($V_S$), the relative velocity ($V_R$) and the driver reaction time ($T_r$).

9. A method according to claim 8, wherein the alert distance ($D_{alert}$) is obtained on the basis of the expression

$$D_{alert} = (V_S{}^2/K_1) - [(V_S - V_R)^2/K_2] + T_r V_S,$$

the terms of which are as herein defined.

10. A method according to claim 8 or 9, wherein the source vehicle command velocity ($V_C$) is determined as a function of the source vehicle velocity ($V_S$), the relative velocity ($V_R$) and the difference between the actual distance ($D_A$) and the desired distance ($D_D$).

11. A method according to claim 10, wherein the source vehicle command velocity ($V_C$) is determined on the basis of the expression

$$V_C = K_p(D_D - D_A) + (V_S - V_R)$$

the terms of which are as herein defined.

12. A method according to any one of claims 7 to 11, comprising the step of limiting the determined vehicle command velocity ($V_C$) to no more than a preset desired cruise velocity ($V_D$).

**Patentansprüche**

1. Ein sich anpassendes Fahrtregelsystem zur Regelung des Abstandes eines Quellfahrzeugs (10) zu einem aufhalten den Fahrzeug (12) mit einem Geschwindigkeitssensor (20) zum Erfassen der Geschwindigkeit ($V_S$) des Quellfahrzeugs; einem Entfernungssensor (22, 24), um den Abstand ($D_A$) von dem Quellfahrzeug zu dem aufhaltenden Fahrzeug zu erfassen, und einem Regelmittel (14), um die Geschwindigkeit des Quellfahrzeugs auf die Quellfahrzeug-Befehlsgeschwindigkeit ($V_C$) einzustellen; gekennzeichnet durch: ein Mittel (25), das durch einen Fahrer des Quellfahrzeugs unabhängig von Fahrzeugbetriebsbedingungen einstellbar ist, um ein Signal zur Verfügung zu stellen, das für die Fahrerreaktionszeit ($T_r$) repräsentativ ist; und ein Verarbeitungsmittel (18), um einen Warnungsabstand ($D_{alert}$) als eine Funktion der Geschwindigkeit ($V_S$) des Quellfahrzeugs und der Fahrerreaktionszeit ($T_r$) zu bestimmen, und somit eine gewünschte Entfernung ($D_D$) des Quellfahrzeugs zu dem aufhaltenden Fahrzeug als eine Funktion des Warnungsabstandes ($D_{alert}$) und eines voreingestellten Abstandes (X) festzulegen, und um eine Quellfahrzeug-Befehlsgeschwindigkeit ($V_C$) festzulegen, die geeignet ist, die gewünschte Entfernung ($D_D$) festzusetzen.

2. Ein sich anpassendes Fahrtregelsystem nach Anspruch 1, das ein geschwindigkeitserfassendes Mittel (20, 22) umfaßt, um die relative Geschwindigkeit ($V_r$) des Quellfahrzeugs zu dem aufhaltenden Fahrzeug zu erhalten; wobei das verarbeitende Mittel (18) dazu ausgebildet ist, den Warnungsabstand ($D_{alert}$) als eine Funktion der Geschwindigkeit des Quellfahrzeugs ($V_S$), der relativen Geschwindigkeit ($V_r$) und der Fahrerreaktionszeit ($T_r$) zu bestimmen.

3. Ein sich anpassendes Fahrtregelsystem nach Anspruch 2, worin das verarbeitende Mittel (18) dazu ausgebildet ist, den Warnungsabstand ($D_{alert}$) auf der Grundlage des Ausdruckes festzulegen:

$$D_{alert} = (V_S{}^2/K_1) - [(V_S - V_R)^2/K_2] + T_r V_S,$$

dessen Terme wie hierin definiert sind.

4. Ein sich anpassendes Fahrtregelsystem nach Anspruch 2 oder 3, worin das verarbeitende Mittel (18) ausgebildet ist, um die Quellfahrzeug-Befehlsgeschwindigkeit($V_C$) als eine Funktion der Quellfahrzeug-Geschwindigkeit ($V_S$), der relativen Geschwindigkeit ($V_R$) und der Differenz zwischen dem tatsächlichen Abstand ($D_A$) und dem gewünschten Abstand ($D_D$) festzulegen.

5. Ein sich anpassendes Fahrtregelsystem nach Anspruch 4, worin das verarbeitende Mittel (18) ausgebildet ist, um die Quellfahrzeug-Befehlsgeschwindigkeit ($V_C$) auf der Grundlage des Ausdruckes festzulegen:

$$V_C = K_p (D_D - D_A) + (V_S - V_R)$$

dessen Terme wie hierin definiert sind.

6. Ein sich anpassendes Fahrtregelsystem nach einem vorhergehenden Anspruch, das umfaßt: ein die gewünschte Geschwindigkeit setzendes Mittel (16), um eine gewünschte Fahrtgeschwindigkeit ($V_D$) zu setzen; und ein begrenzendes Mittel (14, 18), um die festgelegte Fahrzeug-Befehlsgeschwindigkeit ($V_C$) darauf zu begrenzen, nicht größer als die gewünschte Fahrtgeschwindigkeit ($V_D$) zu sein.

7. Ein Verfahren zur Regelung des Abstandes eines Quellfahrzeugs (10) zu einem aufhaltenden Fahrzeug (12), das die Schritte umfaßt, daß die Geschwindigkeit ($V_S$) des Quellfahrzeugs erfaßt wird; die Entfernung ($D_A$) von dem Quellfahrzeug zu dem aufhaltenden Fahrzeug erfaßt wird; und die Geschwindigkeit des Quellfahrzeugs auf die Quellfahrzeug-Befehlsgeschwindigkeit ($V_C$) eingestellt wird; dadurch gekennzeichnet, daß ein Signal, das einstellbar ist und für eine Fahrerreaktionszeit ($T_r$) repräsentativ ist, unabhängig von Fahrzeugbetriebsbedingungen vorgesehen wird; daß ein Warnungsabstand ($D_{alert}$) als eine Funktion der Geschwindigkeit ($V_S$) des Quellfahrzeugs und der Fahrerreaktionszeit ($T_r$) festgelegt wird; ein gewünschter Abstand ($D_D$) des Quellfahrzeugs zu dem aufhaltenden Fahrzeug als eine Funktion des Warnungsabstandes ($D_{alert}$) und eines vorgesetzten Abstandes (X) festgelegt wird; eine Quellfahrzeug-Befehlsgeschwindigkeit ($V_C$) festgelegt wird, die geeignet ist, den gewünschten Abstand ($D_D$) festzulegen.

8. Ein Verfahren nach Anspruch 7, das die Schritte umfaßt, daß die relative Geschwindigkeit ($V_R$) des Quellfahrzeugs zu dem aufhaltenden Fahrzeug erhalten wird; und der Warnungsabstand ($D_{alert}$) als eine Funktion der Geschwindigkeit des Quellfahrzeugs ($V_S$), der relativen Geschwindigkeit ($V_R$) und der Fahrerreaktionszeit ($T_r$) bestimmt wird.

9. Ein Verfahren nach Anspruch 8, worin der Warnungsabstand ($D_{alert}$) erhalten wird auf der Grundlage des Ausdrucks

$$D_{alert} = (V_S^2/K_1) - [(V_S - V_R)^2/K_2] + T_r V_S,$$

dessen Terme wie hierin definiert sind.

10. Ein Verfahren nach Anspruch 8 oder 9, worin die Quellfahrzeug-Befehlsgeschwindigkeit ($V_C$) als eine Funktion der Quellfahrzeug-Geschwindigkeit ($V_S$), der relativen Geschwindigkeit ($V_R$) und der Differenz zwischen dem tatsächlichen Abstand ($D_A$) und dem gewünschten Abstand ($D_D$) festgelegt wird.

11. Ein Verfahren nach Anspruch 10, worin die Quellfahrzeug-Befehlsgeschwindigkeit ($V_C$) auf der Grundlage des Ausdrucks festgelegt wird:

$$V_C = K_p (D_D - D_A) + (V_S - V_R),$$

dessen Terme wie hierin definiert sind.

12. Ein Verfahren nach einem der Ansprüche 7 bis 11, das den Schritt umfaßt, daß die bestimmte Fahrzeug-Befehlsgeschwindigkeit ($V_C$) auf nicht mehr als die vorgesetzte gewünschte Fahrtgeschwindigkeit ($V_D$) begrenzt wird.

## Revendications

1. Système de commande de vitesse de croisière adaptatif pour commander la distance d'un véhicule d'origine (10) à un véhicule obstacle (12) comprenant un capteur de vitesse (20) pour détecter la vitesse (Vs) du véhicule d'origine ; un capteur de distance (22, 24) pour détecter la distance ($D_A$) du véhicule origine ou véhicule obstacle ; et des moyens de commande (14) pour régler la vitesse du véhicule d'origine à la vitesse de commande du véhicule d'origine ($V_C$) ; caractérisé en ce qu'il comprend des moyens (25) réglables par un conducteur du véhicule d'origine indépendamment des conditions de fonctionnement du véhicule, pour fournir un signal représentant le temps de réaction du conducteur (Tr) ; des moyens de traitement (18) pour déterminer une distance d'alerte ($D_{alert}$) en fonction de la vitesse (Vs) du véhicule d'origine et du temps de réaction du conducteur (Tr), pour déterminer une distance désirée ($D_D$) du véhicule d'origine au véhicule obstacle en fonction de la distance d'alerte ($D_{alert}$) et d'une distance prédéterminée (X) et pour déterminer une vitesse de commande du véhicule d'origine ($V_C$) adéquate pour établir la distance désirée ($D_D$).

2. Système de commande de vitesse de croisière adaptatif selon la revendication 1, comprenant des moyens de détection de vitesse (20, 22) pour obtenir la vitesse relative ($V_R$) du véhicule d'origine par rapport au véhicule obstacle ; les moyens de traitement (18) étant adaptés pour déterminer la distance d'alerte ($D_{alert}$) en fonction de la vitesse du véhicule d'origine ($V_S$), de la vitesse relative ($V_r$) et du temps de réaction du conducteur ($T_r$).

3. Système de commande de vitesse de croisière adaptatif selon la revendication 2, dans lequel les moyens de traitement (18) sont adaptés pour déterminer la distance d'alerte ($D_{alert}$) sur la base de l'expression

$$D_{alert} = (V_S{}^2/K_1) - [(V_S - V_R)^2/K_2] + T_rV_S$$

dont les termes sont ici définis.

4. Système de commande de vitesse de croisière adaptatif selon la revendication 2 ou 3, dans lequel les moyens de traitement (18) sont adaptés pour déterminer la vitesse de commande du véhicule d'origine ($V_C$) en fonction de la vitesse du véhicule d'origine ($V_S$), de la vitesse relative ($V_R$) et de la différence entre la distance réelle ($D_A$) et la distance désirée ($D_D$).

5. Système de commande de vitesse de croisière adaptatif selon la revendication 4, dans lequel les moyens de traitement (18) sont adaptés pour déterminer la vitesse de commande du véhicule d'origine ($V_C$) sur la base de l'expression

$$V_C = K_p(D_D - D_A) + (V_S - V_R)$$

dont les termes sont ici définis.

6. Système de commande de vitesse de croisière adaptatif selon l'une quelconque des revendications précédentes, comprenant des moyens de réglage de vitesse de croisière désirée (16) pour régler une vitesse de croisière désirée ($V_D$) ; et des moyens de limitation (14, 18) pour limiter la vitesse de commande du véhicule déterminée ($V_C$) à une valeur non supérieure à la vitesse de croisière désirée ($V_D$).

7. Procédé de commande de la distance d'un véhicule d'origine (10), à un véhicule obstacle (12) comprenant les étages consistant à détecter la vitesse ($V_S$) du véhicule d'origine ; détecter la distance ($D_A$) du véhicule d'origine au véhicule obstacle ; et régler la vitesse du véhicule d'origine à la vitesse de commande du véhicule d'origine ($V_C$) ; caractérisé par la fourniture par le conducteur d'un signal qui est réglable et représente le temps de réaction du conducteur ($T_r$) indépendamment des conditions de fonctionnement du véhicule ; la détermination d'une distance d'alerte ($D_{alert}$) en fonction de la vitesse ($V_S$) du véhicule d'origine et du temps de réaction du conducteur ($T_r$) ; la détermination d'une distance désirée ($D_D$) du véhicule d'origine au véhicule obstacle en fonction de la distance d'alerte ($D_{alert}$) et d'une distance prédéterminée (X) ; la détermination d'une vitesse de commande de véhicule d'origine ($V_C$) adéquate pour établir la distance désirée ($D_D$).

8. Procédé selon la revendication 7, comprenant les étapes consistant à obtenir la vitesse relative ($V_R$) du véhicule d'origine au véhicule obstacle ; et à déterminer la distance d'alerte ($D_{alert}$) en fonction de la vitesse du véhicule d'origine ($V_S$), de la vitesse relative ($V_R$) et du temps de réaction du conducteur ($T_r$).

9. Procédé selon la revendication 8, dans lequel la distance d'alerte ($D_{alert}$) est obtenue sur la base de l'expression

$$D_{alert} = (V_S{}^2/K_1) - [(V_S - V_R)^2/K_2] + T_rV_S$$

dont les termes sont définis ici.

10. Procédé selon la revendication 8 ou 9, dans lequel la vitesse de commande du véhicule d'origine ($V_C$) est déterminée en fonction de la vitesse du véhicule d'origine ($V_S$), de la vitesse relative ($V_R$) et de la différence entre la distance réelle ($D_A$) et la distance désirée ($D_D$).

11. Procédé selon la revendication 10, dans lequel la vitesse de commande du véhicule d'origine ($V_C$) est déterminée sur la base de l'expression

$$V_C = K_P(D_D - D_A) + (V_S - V_R)$$

dont les termes sont ici définis.

12. Procédé selon l'une quelconque des revendications 7 à 11, comprenant l'étape consistant à limiter la vitesse déterminée de commande du véhicule ($V_C$) à une valeur non supérieure à une vitesse de croisière désirée fixée a l'avance ($V_D$).

FIG.1

$V_T$

12

$V_S$

10

$D_A$

FIG.2

SPEED SIGNAL

CRUISE SWITCHES — 16

SPEED SIGNAL COND. — 20

CRUISE COMPUTER — 14

AUDIBLE ALERT — 26

$V_S$  $V_C$  $V_D$

ADAPTIVE CRUISE COMPUTER — 18

FOLLOWING DISTANCE POTENTIOMETER — 25

$D_A$  $V_R$

RADAR COMPUTER — 24

RADAR SENSOR — 22

FIG.3

FIG.4